# EUROPEAN PATENT SPECIFICATION

(11) **EP 2 662 225 B1**
(45) Date of publication and mention of the grant of the patent: **12.04.2017**
(21) Application number: 12195587.6
(22) Date of filing: 05.12.2012
(51) Int. Cl.: B60C 9/00, B60C 9/04, D02G 3/48

(54) **Polyamid carcass ply with two moduli of elasticity in a pneumatic tire**
Karkasse mit zwei Elastizitäts-Modulen in einem Luftreifen
Pli de carcasse de deux modules d'élasticité dans un pneu

(30) Priority: 13.12.2011 US 201113323952
(43) Date of publication of application: 13.11.2013
(73) Proprietor: The Goodyear Tire & Rubber Company, Akron, OH 44316-0001 (US)
(72) Inventor: Westgate, Walter Kevin, Uniontown, OH Ohio 44685 (US); Gopez, Florencio Lim, Chesterfield, VA Virginia 23832 (US); Kim, Seungbo, Fairlawn, OH Ohio 44333 (US); Love, Nathan Whitney, Richmond, VA Virginia 23225 (US)
(74) Representative: Kutsch, Bernd

(56) References cited:
- EP-A2- 1 745 945
- EP-A2- 1 878 591
- WO-A1-2012/083148

## Description

### Field of the Invention

The present invention is directed towards a pneumatic tire. More specifically, the present invention is directed towards a pneumatic tire wherein a single carcass reinforcement layer comprises a dual modulus cord.

### Background of the Invention

One conventional overlay for a pneumatic tire utilizes a hybrid cord. The hybrid cord is formed of two different materials: a low initial modulus core yarn and high modulus wrap yarns. The selection of the yarns is such that the "break point" of the cord, i.e. when the slope of the force versus elongation curve changes from a relatively low slope to a relatively high slope, occurs at an elongation between 2% and 3% elongation, with an ultimate cord break at just over 5% elongation.

Another conventional overlay utilizes a hybrid cord of aramid and nylon twisted together, wherein the break point of the cord is at an elongation between 4% and 6% elongation, with an ultimate cord break at over 10% elongation. In an overlay, the hoop reinforcing effects of a strong cord are desired. However, the cord must have elongation properties to a degree to permit the tire to expand into a toroidal shape during tire molding.

A conventional runflat pneumatic tire utilizes two carcass reinforcing plies and reinforcing wedge inserts in the tire sidewalls. The wedge inserts resist radial deflection of the pneumatic tire with a combination of compressive and bending stresses in both inflated, as well as uninflated conditions. A conventional runflat tire may experience a net compressive load in the region of the sidewall closest to the road-contacting portion of the pneumatic tire. Additionally, the outer portions of the sidewall may experience tensile forces, while the inner portions of the sidewall undergo compression stresses during bending. The conventional runflat tire balances the necessary flexibility in the inflated state with the rigidity in the uninflated state by employing two reinforcing carcass plies. The axially outermost ply has cords that have a modulus of elasticity that increases with strain. The axially innermost ply has cords having a modulus that exceeds that of the outermost ply during normal loads in an inflated state. Thus, the innermost ply handles the majority of the load during normal operation, and the outermost ply does not equally contribute to the load carrying during normal operation. When the tire is operated in an uninflated state, the load is shifted from the axially innermost ply to the axially outermost ply and again the plies do not equally contribute to the load carrying. The outermost ply may not contribute to the overall rigidity of the tire sidewall during normal inflation operation.

Another conventional runflat tire may exhibit bending behavior of tire components to achieve improved comfort and handling performance, and also improved run-flat performance. This runflat pneumatic tire may have a single carcass ply, at least one belt ply disposed radially outward of the carcass ply in a crown portion of the tire, and at least one insert located adjacent the carcass ply in a sidewall portion. The insert may provide support for the pneumatic tire load to enable the tire to operate in underinflated conditions. The carcass ply comprises at least one composite cord formed of at least two first yarns twisted helically about at least one second yarn. The first yarns and the second yarn having different modulus of elasticity, the first yarns having a modulus greater than the modulus of the second yarn.

EP-A- 1 745 945 describes a tire in accordance with the preamble of claim 1.

WO- A- 2012/083148 describes a hybrid cord having high tenacity and high elongation at break. The cord, which may be used in a tire, is a composite cord comprising three aramid yarns twisted helically about one nylon yarn.

### Definitions

"Cord" means one of the reinforcement strands which the reinforcement structures of the tire comprise.

"Denier" means the weight in grams per 9000 meters (unit for expressing linear density). Dtex means the weight in grams per 10,000 meters.

"Density" means weight per unit length.

"LASE" is load at specified elongation.

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Summary of the Invention

The invention relates to a tire in accordance with claim 1.

Dependent claims refer to preferred embodiments of the invention.

In accordance with a preferred aspect of the present invention, the first yarn has a linear density value in the range of 350 dtex to 600 dtex.

In accordance with still another preferred aspect of the present invention, the second yarns have a linear density value in the range of 800 dtex to 1100 dtex.

In accordance with yet another aspect of the present invention, the composite cords have an end count per 2.54 cm in the carcass ply in the range of 15 - 32 (5.9 - 12.6 ends per cm).

### Brief Description of the Drawings

The invention will be described by way of example and with reference to the accompanying drawings in which:
FIG. 1 is a cross sectional view of an example tire for use with the present invention;
FIG. 2 is an example cord construction in accordance with the present invention; and
FIG. 3 is a chart showing the load versus displacement values for a carcass ply construction in accordance with the present invention.
FIG. 4 is a chart showing the modulus versus elongation values for a carcass ply construction in accordance with the present invention.

### Detailed Description of Examples of the Present Invention

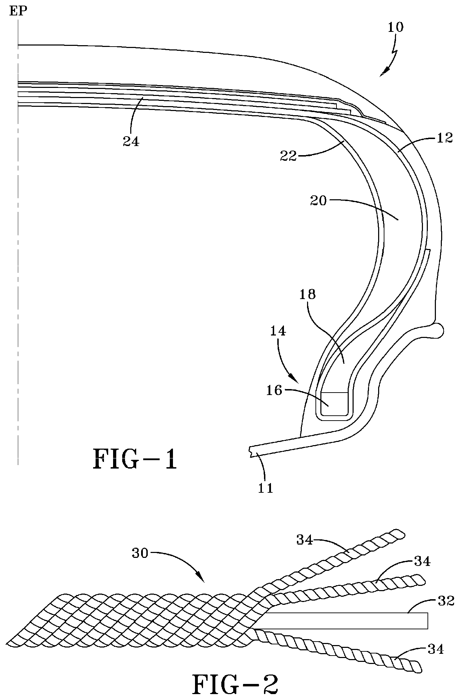

FIG. 1 is a cross-sectional view of an example pneumatic runflat tire 10, mounted on a tire rim 11, designed to be capable of continued operation during under-inflated or deflated conditions. Only one half of the tire 10 is shown, it being understood that, conventionally, the other half is a mirror image of that which is illustrated. The example tire 10 has a single reinforcing ply 12 extending from one bead area 14 of the tire to an opposing bead area. The ends of the reinforcing ply 12 are turned axially inward to axially outward about bead cores 16 and bead apexes 18. The terminal ends of the reinforcing ply 12 extend past the radially outer ends of the bead apexes 18 enveloping the bead apexes 18.

Located in each sidewall region of the example tire 10 is a sidewall insert 20. The insert 20 may be located adjacent to the tire innerliner 22 or axially outward of the reinforcing ply 12. The insert 20 may be formed of elastomeric material and may extend from the crown area, preferably from radially inward of the belt structure 24, to radially inward of the outermost terminal end of the bead apexes 18, overlapping the bead apexes 18. The elastomeric material of the insert 20 may be selected to provide the tire with support during underinflated operation of the tire 10.

In the crown area of the example tire 10, a belt structure 24 may be located radially outward of the carcass ply 12. The belt structure 24 may have at least two inclined, crossed cord belt plies. The cords in the belt plies may be inclined with respect to the circumferential direction and the cords in directly adjacent plies may be inclined at similar, but opposing, angles to each other. Outward of the cross cord plies may be an overlay ply 26. The overlay ply 26 may have a width equal or greater than the maximum width of the crossed cord plies, encapsulating the crossed cord plies between the overlay ply 26 and the carcass reinforcing ply 12. The overlay ply 26 may be reinforced with cords inclined at angles of 15° or less relative to the equatorial plane (EP) of the example tire 10.

In accordance with the present invention, the carcass ply 12 may be formed from a cord 30, as seen in FIG. 2. The cord 30 may be a composite cord made of filament yarns of appropriate stress-strain characteristics to provide the example tire 10 with additional bending resistance when the tire operates in a runflat mode. As an example, the cord 30 is formed of a single one low modulus yarn 32 about which is twisted three high modulus yarns 34. The construction allows the lower modulus component of the cord 30 to work at relative low strain, i.e. the inflated tire mode, until the cord has reached an allowable elongation, from which point, only the high modulus component will be under tension, i.e. the runflat tire mode, and will limit the stretch of the cord.

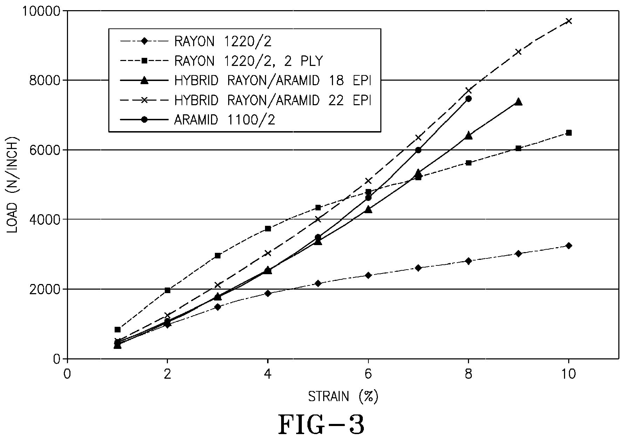

Furthermore, a relatively soft sidewall structure, under normal operating tire conditions, may enhance compliancy (i.e., enveloping for comfort) via a very low modulus/strain ratio. When subjected to a sudden increase of strain (e.g. evasive maneuver, impact), a relatively stiff sidewall structure may enhance stiffness (i.e., stiffness for handling) via a very high modulus/strain ratio. A dual modulus cord (i.e., cord 30 in FIG. 2) for a carcass in accordance with the present invention may provide a better ride without compromising handling (FIG. 3). The normal operating modulus may be equal to or less than a PET construction to provide a softer ride. Advantageously, the modulus may trend up drastically to stiffen up the sidewall/carcass for enhanced handling/cornering (FIG. 4). Such a cord construction as described above may also allow the omission of an overlay, thereby reducing cost and weight. For example, removal of the overlay may reduce stiffness, but enhance enveloping. The "trending up" modulus provided by the cord of the present invention will, however, increase handling/cornering stiffness when subjected to higher elongations (FIGS. 3 & 4).

Such a "dual modulus" cord, with a load/deflection response (to an applied axial load) having two distinct slopes, may, for example, provide an inflection point (between the two slopes) occurring between 0.5 and 6% (FIG. 4). Consequently, ride comfort may be enhanced while maintaining handling, which is counterintuitive to the conventional trade-off of these two tire performance characteristics.

The unique advantage is that under normal operating conditions, compliancy/handling of a tire 10 with a ply 12 comprising such cords 30 may be satisfied. However, when subjected to a bump, pothole, evasive maneuver, enveloping etc, the tire 10 may automatically stiffen to provide an appropriate response to maintain handling and control.

Possible reinforcing materials for either the high or low modulus yarns include, but are not limited to, aramid, polyethylene ketone (PK), polyphenylene-2,6-benzobisoxazole (PBO), rayon, nylon, polyester, polyamide, polyethylene terephthalate (PET), polyethylene napthalate (PEN), and polyvinyl alcohol (PVA). Particularly, a unique construction of a nylon core yarn 32 with three aramid yarns 34 twisted about the core yarn may produce such dual modulus characteristics (i.e., (800-1100dtex/3 + 350-600dtex/1)/(9-11)Z/(0-2)Z/(9-11)S. One example construction may be (950dtex/3 aramid + 467dtex/1 nylon)/(9-11)Z/(0-2)Z/(9-11)S with an end count per 2.54 cm in the carcass ply in the range of 15 - 32 (5.9 - 12.6 ends per cm).

Other example materials of the high modulus yarns may be aramid, PK, PVA, or PBO, while the low modulus yarns may be rayon, nylon, polyester, PET, or PEN. The final material selection may be based on the specific desired stress/strain characteristics of the cord 30. The main requirement is that the wrap yarns have a modulus greater than the core yarns. Thus, the wrap yarns are aramid with a nylon core yarn.

In the example cord 30, each of the yarns 32, 34 has its component filaments twisted together a given number of turns per unit of length of the yarn 32, 34 (usually expressed in turns per 2.54 cm (TPI)) and additionally the yarns 32, 34 are twisted together a given number of turns per unit of length of the cord 30. The direction of twist refers to the direction of slope of the spirals of a yarn or cord when it is held vertically. If the slope of the spirals conform in direction to the slope of the letter "S", then the twist is called "S", or "left hand". If the slope of the spirals conform in direction to the slope of the letter "Z", then the twist is called "Z", or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "dtex" is understood to mean the weight in grams of 10,000 meters of a yarn before the yarn has a twist imparted thereto.

As stated above, a carcass ply 12 of hybrid cords 30 in accordance with the present invention produces excellent "dual modulus" performance in a tire 10 as well as allowing a reduction in materials without sacrificing performance. This carcass ply 12 thus enhances the performance of the tire 10, even though the complexities of the structure and behavior of the pneumatic tire are such that no complete and satisfactory theory has been propounded.

## Claims

1. A pneumatic tire having a single carcass ply (12) and a belt structure (24) disposed radially outward of the single carcass ply (12) in a crown portion of the tire (10), the carcass ply (12) comprising at least one composite cord (30) comprising three aramid first yarns (34) twisted helically about one nylon second yarn (32), the first yarns (34) having a modulus of elasticity greater than the modulus of elasticity of the second yarn (32), **characterized in that** the first yarns (34) have a modulus of elasticity at least 3 times greater than the modulus of elasticity of the second yarn (32).

2. The tire of claim 1 wherein the first yarns have a linear density in a range of from 350 dtex to 600 dtex.

3. The tire of claim 2 wherein the first yarns have a linear density in a range of from 450 dtex to 500 dtex such as 467 dtex.

4. The tire of at least one of the previous claims wherein the second yarn has a linear density in a range of from 800 dtex to 1100 dtex.

5. The tire of claim 4 wherein the second yarn has a linear density in a range of from 900 dtex to 1000 dtex such as 950 dtex.

6. The tire of at least one of the previous claims wherein the first yarns (34) have a yarn twist in a range of from 9 to 11 turns per 2.54 cm.

7. The tire of at least one of the previous claims wherein the second yarn (32) have a yarn twist in a range of from 0 to 2 turns per 2.54 cm.

8. The tire of at least one of the previous claims wherein the yarn twist directions of the first and second yarns (32, 34) are the same, preferably Z-direction.

9. The tire of at least one of the previous claims wherein the cord (30) has cord twist or overall twist in a range of from 9 to 11 turns per 2.54 cm, preferably with a S-twist direction.

10. The tire of at least one of the previous claims wherein the composite cord (30) in the carcass ply (12) has an end count per 2.54 cm in a range of from 15 to 32.

11. The tire of at least one of the previous claims wherein the composite cord (30) in the carcass ply (12) has an end count per 2.54 cm in a range of from 24 to 30.

12. The tire of at least one of the previous claims wherein the first yarns (34) have a modulus of elasticity at least 10 times greater than the modulus of elasticity of the second yarn (32).

13. The tire of at least one of the previous claims wherein the first yarns (34) have a modulus of elasticity at least 50 times greater than the modulus of elasticity of the second yarn (32).

14. The tire of at least one of the previous claims wherein the tire is a runflat tire.

## Patentansprüche

1. Luftreifen mit einer einzigen Karkassenlage (12) und einer radial auswärts von der einzigen Karkassenlage (12) in einem Zenitbereich des Reifens (10) angeordneten Gürtelstruktur (24), wobei die Karkassenlage (12) mindestens einen Verbundmaterialkord (30) umfasst, der drei aus Aramid bestehende erste Garne (34), die schraubenförmig um ein aus Nylon bestehendes zweites Garn (32) verdrillt sind, umfasst, wobei die ersten Garne (34) einen Elastizitätsmodul aufweist, der größer als der Elastizitätsmodul des zweiten Garns (32) ist, **dadurch gekennzeichnet, dass** die ersten Garne (34) einen Elastizitätsmodul aufweisen, der mindestens 3 mal größer als der Elastizitätsmodul des zweiten Garns (32) ist.

2. Reifen nach Anspruch 1, wobei die ersten Garne eine lineare Dichte im Bereich von 350 dtex bis 600 dtex aufweisen.

3. Reifen nach Anspruch 2, wobei die ersten Garne eine lineare Dichte im Bereich von 450 dtex bis 500 dtex, wie etwa 467 dtex, aufweisen.

4. Reifen nach mindestens einem der vorhergehenden Ansprüche, wobei das zweite Garn eine lineare Dichte im Bereich von 800 dtex bis 1100 dtex aufweist.

5. Reifen nach Anspruch 4, wobei das zweite Garn eine lineare Dichte im Bereich von 900 dtex bis 1000 dtex, wie etwa 950 dtex, aufweist.

6. Reifen nach mindestens einem der vorhergehenden Ansprüche, wobei die ersten Garne (34) eine Garndrehung im Bereich von 9 bis 11 Windungen je 2,54 cm aufweisen.

7. Reifen nach mindestens einem der vorhergehenden Ansprüche, wobei das zweite Garn (32) eine Garndrehung im Bereich von 0 bis 2 Windungen je 2,54 cm aufweist.

8. Reifen nach mindestens einem der vorhergehenden Ansprüche, wobei die Garndrehrichtungen der ersten Garne und des zweiten Garns (32, 34) dieselben, bevorzugt Z-Richtung, sind.

9. Reifen nach mindestens einem der vorhergehenden Ansprüche, wobei der Kord (30) eine Kordverdrehung oder Gesamtverdrehung im Bereich von 9 bis 11 Windungen je 2,54 cm, bevorzugt mit einer S-Drehrichtung, aufweist.

10. Reifen nach mindestens einem der vorhergehenden Ansprüche, wobei der Verbundwerkstoffkord (30) in der Karkassenlage (12) eine Endenzahl je 2,54 cm im Bereich von 15 bis 32 aufweist.

11. Reifen nach mindestens einem der vorhergehenden Ansprüche, wobei der Verbundwerkstoffkord (30) in der Karkassenlage (12) eine Endenzahl je 2,54 cm im Bereich von 24 bis 30 aufweist.

12. Reifen nach mindestens einem der vorhergehenden Ansprüche, wobei die ersten Garne (34) einen Elastizitätsmodul aufweisen, der mindestens 10 mal größer als der Elastizitätsmodul des zweiten Garns (32) ist.

13. Reifen nach mindestens einem der vorhergehenden Ansprüche, wobei die ersten Garne (34) einen Elastizitätsmodul aufweisen, der mindestens 50 mal größer als der Elastizitätsmodul des zweiten Garns (32) ist.

14. Reifen nach mindestens einem der vorhergehenden Ansprüche, wobei der Reifen ein Reifen mit Notlaufeigenschaften ist.

## Revendications

1. Bandage pneumatique possédant une nappe de carcasse unique (12) et une structure de ceinture (24) disposée en direction radiale à l'extérieur de la nappe de carcasse unique (12) dans une portion de sommet du bandage pneumatique (10), la nappe de carcasse (12) comprenant au moins un câblé composite (30) comprenant trois premiers fils d'amide (34) enroulés en une configuration hélicoïdale autour d'un deuxième fil de nylon (32), les premiers fils (34) possédant un module d'élasticité supérieur au module d'élasticité du deuxième fil (32), **caractérisé en ce que** les premiers fils (34) possèdent un module d'élasticité au moins trois fois supérieur au module d'élasticité du deuxième fil (32).

2. Bandage pneumatique selon la revendication 1, dans lequel les premiers fils possèdent une densité linéaire dans la plage de 350 dtex à 650 dtex.

3. Bandage pneumatique selon la revendication 2, dans lequel les premiers fils possèdent une densité linéaire dans la plage de 450 dtex à 550 dtex, telle que 465 dtex.

4. Bandage pneumatique selon au moins une des revendications précédentes, dans lequel le deuxième fil possède une densité linéaire dans la plage de 800 dtex à 1.100 dtex.

5. Bandage pneumatique selon au moins une des revendications précédentes, dans lequel le deuxième fil possède une densité linéaire dans la plage de 900 dtex à 1.000 dtex, telle que 950 dtex.

6. Bandage pneumatique selon au moins une des revendications précédentes, dans lequel les premiers fils (34) possèdent une torsion de fil dans la plage de 9 à 11 spires par 2,54 cm.

7. Bandage pneumatique selon au moins une des revendications précédentes, dans lequel le deuxième fil (32) possède une torsion de fil dans la plage de 0 à 2 spires par 2,54 cm.

8. Bandage pneumatique selon au moins une des revendications précédentes, dans lequel les directions de torsion des premiers et deuxième fils (32, 34), sont identiques, de préférence dans la direction Z.

9. Bandage pneumatique selon au moins une des revendications précédentes, dans lequel le câblé (30) possède une torsion de câblé ou une torsion globale de câblé dans la plage de 9 à 11 spires par 2,54 cm, de préférence avec une direction de torsion de type S.

10. Bandage pneumatique selon au moins une des revendications précédentes, dans lequel le câblé composite (30) dans la nappe de carcasse (12) possède un nombre de bouts par 2,54 cm dans la plage de 15 à 32.

11. Bandage pneumatique selon au moins une des revendications précédentes, dans lequel le câblé composite (30) dans la nappe de carcasse (12) possède un nombre de bouts par 2,54 cm dans la plage de 24 à 30.

12. Bandage pneumatique selon au moins une des revendications précédentes, dans lequel les premiers fils (34) possèdent un module d'élasticité au moins 10 fois supérieur au module d'élasticité du deuxième fil (32).

13. Bandage pneumatique selon au moins une des revendications précédentes, dans lequel les premiers fils (34) possèdent un module d'élasticité au moins 50 fois supérieur au module d'élasticité du deuxième fil (32).

14. Bandage pneumatique selon au moins une des revendications précédentes, dans lequel le bandage pneumatique et un bandage pneumatique permettant de rouler à plat.
